# EUROPÄISCHE PATENTSCHRIFT

(11) **EP 0 557 789 B1**
(45) Veröffentlichungstag und Bekanntmachung des Hinweises auf die Patenterteilung: **12.06.1996**
(21) Anmeldenummer: 93102008.5
(22) Anmeldetag: 09.02.1993
(51) Int. Cl.: B29C 53/04, B65H 23/038, B65H 23/188

(54) **Verfahren zur Anformung von Profilen pilzförmigen Querschnittes als Verschlusselemente an wärmeschrumpffähigen Kunststoffbahnen**
Method for forming profiles having a mushroom-shaped section, as closure element, on heat-shrinkable plastic webs
Procédé pour former des profils à section en forme de champignon, ayant fonction d'éléments de fermeture sur des bandes en matière plastique thermorétractable

(30) Priorität: 28.02.1992 DE 4206293
(43) Veröffentlichungstag der Anmeldung: 01.09.1993
(73) Patentinhaber: RXS Kabelgarnituren Gesellschaft mit beschränkter Haftung, D-58093 Hagen (DE)
(72) Erfinder: Brudermann, Uwe, Dr., D-5804 Herdecke (DE)
(74) Vertreter: Fuchs, Franz-Josef, Dr.-Ing.

(56) Entgegenhaltungen:
- EP-A- 0 063 868
- EP-A- 0 270 132
- DE-A- 2 853 518
- FR-A- 2 595 339
- FR-E- 92 981
- GB-A- 234 998

## Beschreibung

Die Erfindung betrifft ein Verfahren zur Anformung von Profilen pilzförmigen Querschnittes als Verschlußelemente entlang der beiden Längskanten einer quer zur Längsrichtung wärmeschrumpffähigen Kunststoffbahn.

Nach der Methode eines "Strumpfbandhalters" kann in an sich bekannter Weise die Befestigung eines weichen flächenhaften Materials erfolgen, in dem einseitig auf dieses Material ein härteres Substrat aufgebracht wird, wobei das weiche, flächige Material so verformt wird, daß es das härtere Substrat so weit umschließt, daß dieses in der das weiche flächige Material mechanisch beanspruchenden Bewegungsrichtung nicht entfernt werden kann, ohne daß das weiche, flächenhafte Material entweder wieder entformt oder zerstört wird. Die Entformung wird dabei verhindert, indem ein vergleichsweise nicht verformbarer Körper mit konkaver innerer Kontur über die durch das Substrat in der Kontur des weichen flächenhaften Materials hervorgerufene Verdickung gebracht wird, so daß die Verdickung einen Hinterschnitt ungefähr in Pilzform aufweist, der eine Entnahme der Verdickung aus dem äußeren konkav geformten Körper ohne Zerstörung unmöglich macht. Bei einem Strumpfbandhalter ist der innere, harte Körper knopfförmig mittels eines Bandes flexibel aber unverlierbar mit dem äußeren harten Körper verbunden, während der äußere harte Körper die bekannte birnenförmige Öffnung aufweist und meist aus Draht gebogen ist und deren weiterer Teil der Öffnung den Knopf inklusive des übergestülpten Strumpfmaterials ("Pilzkopf") durchlassen kann, während deren engerer Teil ("Pilzstiel") zwar das um den knopfförmigen Körper geformte flächige Material umfassen kann, nicht aber den Knopf mit seiner Hülle aus Strumpfmaterial ("Pilzkopf") passieren läßt. Ein solches zweidimensionales Beispiel läßt eine Öffnung des Verschlusses nur auf dem linienförmigen Montageweg in umgekehrter Richtung zu und verhindert eine Demontage in allen anderen Bewegungsrichtungen.

Wird nun ein derartiger Verschluß mit einem profilförmigen, inneren Körper in dieser Weise ausgeführt, so läßt sich eine Verschlußeinrichtung für Schrumpfmanschetten, insbesondere für verstärkte Schrumpfmanschetten herstellen, die gewissermaßen ein eindimensionales Beispiel für dieses Prinzip bildet. Bei solchen Schrumpfmanschetten wird das erläuterte Prinzip in der Gestalt angewandt, daß entlang der Längskanten einer schrumpffähigen Bahn aus Kunststoff ein stabförmiges Element angeordnet wird. Nach dem Zusammenschlagen jeder Längskante über die stabförmige Einlage hinweg wird dann ein sogenannter "Pilzkopf" gebildet, wenn die beiden nun mit den stabförmigen Einlagen versehenen Längskanten gegeneinander gepreßt werden. Mit "Pilzkopf" wird hier der Tatbestand bezeichnet, daß die Kante ein Profil mit pilzförmigem Querschnitt aufweist. Über diesen "Pilzkopf" wird dann eine C-förmige Schiene aufgezogen. Bei dem Herstellungsvorgang werden die Kanten des Manschettenmaterials so um einen stabförmigen harten Körper gelegt, daß sich ein im Randbereich doppelt dickes, flexibles Flachmaterial ergibt, das eine verdickte Kante aufweist, deren Kern unnachgiebig ist. Wenn nun über die Verdickung die genannte Schiene geschoben wird, kann diese quer zur Aufschieberichtung nicht mehr von dem im Querschnitt pilzförmigen Verschlußelement zerstörungsfrei entformt werden.

Aus der europäischen Patentschrift 0 272 364 - B1 ist ein Verfahren bekannt, nach dem eine solche Umschließung einer Stabeinlage erfolgen kann. Daraus ist zu entnehmen, daß die Umschließung einer Stabeinlage in einem diskontinuierlichen Prozeß, das heißt also nur in einer der Manschette entsprechenden Länge, vorgenommen wird. Dort wird jeweils eine Längskante der Manschette schlaufenförmig umgebogen, in eine Klemmvorrichtung in Manschettenlänge eingespannt und der Stab in die Schlaufenkontur eingebracht. Anschließend wird die Schlaufe durch Erwärmung auf den eingeführten Stab zurückgeschrumpft. Nachteilig ist dabei, daß das mit einem schrumpfbaren Gewebe versehene Manschettenmaterial zur Umformung in den Kantenbereichen auf Schrumpftemperatur erhitzt werden muß, um es dadurch weich und elastisch zu machen. Durch das Schrumpfen wird das Material dicker, um wieviel hängt von der (nicht leicht reproduzierbaren) Schlaufengeometrie ab, sowie von der Ausgangsdicke des Materials, die ihrerseits vom (ebenfalls nicht leicht reproduzierbaren) örtlichen Reckfaktor abhängt und der Materialstärke vor dem Recken. Die Geometrie der fertig geschrumpften Kante hängt also wesentlich von den Schrumpfeigenschaften des Materials ab, der Schrumpfprozeß selbst besteht in einer Materialverformung, die von den hier genannten Faktoren abhängt, d.h. in von unbekannten Kräften und Spannungen hervorgerufenen Verformungen, woraus folgt, daß die Kantenkontur (= Kantengeometrie) nicht exakt vorherbestimmbar ist. Für die Applikation der C-Schiene ist die Kantengeometrie aber nur eingeschränkt tolerierbar. Außerdem können sich nach Erweichung der Matrix die die Schrumpfkräfte wesentlich bewirkenden Fäden der Gewebeeinlage leicht aufgrund des ihnen eigenen Längsschrumpfes aus dem Randbereich herausziehen oder ihre Lage innerhalb der Matrix verändern. Weiterhin wird bei dieser Art der Kantenbehandlung ein Teil des Schrumpfmaßes verbraucht und steht somit für die eigentliche Funktion der Manschette nicht mehr zur Verfügung. Aufgrund des Schrumpfungsprozesses im Schlaufenbereich wird dieser aufgedickt, ohne daß die harte Stabeinlage verhältnisgleich ebenfalls in ihrer Dicke zunimmt, wodurch der für den Verschluß der Manschette nutzbare Unterschied der Ausdehnung des verdickten Bereiches mit pilzförmigem Querschnitt und dem bei der Herstellung in der Klemmvorrichtung befindlichen Teil mit pilzstielförmigem Querschnitt von doppelter Manschettenmaterialstärke einer ungünstigeren Formgebung der C-Schiene bedarf.

Aus der deutschen Patentschrift 30 09 078 ist weiterhin eine längsgeteilte Kabelmuffe aus schrumpfbarem Material mit eingelagerten Verstärkungsmitteln in Wülsten entlang der Verschlußbereiche bekannt. Diese langgestreckten, mit Stabeinlagen versehenen Wülste werden dort einzeln in längsverlaufende Kanäle einer T-förmigen Verschlußschiene eingeführt und zusammengehalten.

Ganz allgemein bekannt ist auch aus der Blechindustrie ein Verfahren zur Herstellung von Blechprofilen aus Band, bei dem die Profilierung über Rollensätze schrittweise im kontinuierlichen Prozeß durch nacheinander angeordnete Stationen vorgenommen wird. Ein solches Verfahren ist jedoch für das Kunststoffmaterial, aus dem die Schrumpfmanschetten hergestellt werden, insbesondere wenn es sich um ein Manschettenmaterial mit Verstärkungseinlage handelt, nicht anwendbar, weil diese Manschettenmaterialien nicht die Plastizität von den zur Profilherstellung verwendeten Blechen aufweisen und die Verformung sich daher nach jeder Stufe in gewissem Umfang wieder rückbildet. Außerdem bewirkt die geringe innere Festigkeit des Manschettenmaterials bei der gewollten Verformung an den Rollensätzen der Verformungsvorrichtung auch gleichzeitig einen Anteil an Längsdehnung, der die Ebenheit der Manschette und damit ihre Applikationsfähigkeit deutlich verschlechtert und ein bequemes Aufschieben der C-Schiene unmöglich macht. Außerdem bewirkt die erwähnte Längsdehnung beim kontinuierlichen Verformungsprozeß zwangsweise ein seitliches Auswandern der Bahnkanten aus den Rollensätzen der Verformungsvorrichtung.

Der Erfindung liegt nun eine erste Aufgabe zugrunde, ein Verfahren zu finden, bei dem entlang der Längskanten eines bahnförmigen, schrumpffähigen Manschettenmaterials in einfacher und wirtschaftlicher Weise Stabeinlagen so angeordnet werden können, daß die auf diese Weise gebildeten Längskanten nach dem Umschließen eines Gegenstandes ein gemeinsames Verschlußelement bilden, über das eine C-förmige Verschlußschiene aufgezogen werden kann. Die gestellte Aufgabe wird nun nach einem Verfahren der eingangs erläuterten Art dadurch gelöst, daß beide Längskanten der Kunststoffbahn in Längsrichtung fortlaufend und gleichzeitig durch mindestens drei Rollensatzpaare spiegelbildlich zueinander zu Verschlußelementen umgeformt werden, wobei mindestens ein Rollensatzpaar mit einer Vorspur so auf einem um eine vertikale Achse verdrehbaren Schlitten montiert ist, daß die Kunststoffbahn während des Ablaufs quer gestrafft wird und daß durch eine an einer Längskante der Kunststoffbahn befindliche Abtastvorrichtung die Winkelstellung des Schlittens so veränderbar ist, daß ein seitliches Auswandern der Kunststoffbahn verhindert wird, daß in einem zweiten Rollensatzpaar jede der Längskanten der Kunststoffbahn zu einer Nut geformt wird, daß gleichzeitig oder nachfolgend Stabeinlagen in die geformte Nut eingebracht werden, wobei die Stabeinlagen vor dem Einbringen so erwärmt werden, daß beim Berühren der mit Kleber beschichteten Kunststoffbahn der Kleber aktiviert wird und daß die Stabeinlagen beim Erkalten des Klebers fixiert werden, daß anschließend jede der bereits soweit umgeformten Längskanten auf ihrer kleberbeschichteten Seite bis zur Aktivierung der Kleberbeschichtungen erwärmt wird und daß jede Längskante durch ein weiteres Rollensatzpaar um die jeweils fixierte Stabeinlage herumgeformt, durch Anpressen verklebt und als Verschlußelement mit einer ebenen Seite und mit einer hinterschnittenen Profilseite kalibriert wird und daß schließlich die kontinuierlich gefertigte Kunststoffbahn in einer Ablängvorrichtung in gewünschter Größe in Einzelstücke abgelängt wird.

Weiterhin stellt sich die Aufgabe, eine Vorrichtung zu schaffen, in der das erfindungsgemäße Verfahren eingesetzt werden kann. Diese Aufgabe wird mit einer Vorrichtung nach Anspruch 8 gelöst.

Das Verfahren gemäß der Erfindung weist nun die oben genannten Nachteile nicht mehr auf; doch zeigen sich gegenüber dem genannten Stand der Technik noch wesentliche Vorteile. So ergibt sich unter anderem eine wesentlich einfachere und kostengünstigere Herstellung, da nun eine kontinuierliche und damit gleichmäßige Kantenanformung für Verschlußelemente zu beiden Seiten der Längskanten einer wärmeschrumpffähigen Bahn erfolgen kann. Durch die Ausführung der Verformungsvorrichtung können die üblicherweise auftretenden Randstörungen durch Abwandern des Bahnmaterials vermieden werden. Außerdem kann durch einfache Umstellung der Verformungseinrichtung eine beliebige und kalibrierbare Formgebung erfolgen, so daß verschiedene Manschettentypen auf der gleichen Verformungsvorrichtung hergestellt werden können, wobei auch hier die Simultanumformung an beiden Kanten gleichzeitig erfolgen kann. Außerdem ist bei der Anformung der Verschlußelemente keine Erhitzung und Abkühlung des Manschettenmaterials nötig, so daß die Umformung der Längskanten ohne Aktivierung von Schrumpfkräften und damit ohne Materialschädigung erfolgen kann. Weiterhin ergeben sich bei der Verformungsvorrichtung Möglichkeiten zur Kleberverdrängung im Falzbereich. Durch eine selbsttätige Falzsteuerung läßt sich eine hohe Prozeßsicherheit erreichen, wobei sich durch einen hohen Grad von Automatisierung große Kostenersparnisse bezüglich der Bedienung der Umformungsvorrichtung ergeben. Außerdem kann von unterschiedlichen Ausgangsbreiten ausgegangen werden, so daß für verschiedene Manschettentypen nur eine Vorrichtung nötig ist.

Das erfindungsgemäße Verfahren weist die im Stand der Technik zu findenden Nachteile nicht auf und so ergeben sich folgende Vorteile:
Zur Symmetrierung werden beide zu verformenden Manschettenkanten gleichzeitig verformt, indem jeder Rollensatz spiegelbildlich doppelt vorhanden ist und beide Kanten simultan umgeformt werden.

Um die Straffung der Kunststoffbahn quer zur Verarbeitungsrichtung zu erreichen, die zumindest nötig ist, um die profilierten Kanten über die Bahnlänge in definiertem und konstantem Abstand zu halten, wird denjenigen Rollensatzparen, zwischen denen ein Durchhängen möglich ist, durch geeignete Winkelstellung der Rollenachsen eine Vorspur gegeben, d.h. daß durch den Abrollmechanismus der Rollen der betroffenen Rollenstationen auf der Bahn aus Manschettenmaterial Querkräfte auf die Bahn dergestalt ausgeübt werden, daß die linke Bahnkante nach links und die rechte Bahnkante nach rechts gezogen wird. Diese Querkräfte können bei fester Einstellung der Rollensätze nicht immer symmetrisch gehalten werden, so daß die links oder rechtswirkende Kraft überwiegen kann, was ein Auflaufen der Kunststoffbahn auf der einen, verbunden mit einem Auslaufen der Kunststoffbahn auf der gegenüberliegenden Seite, verursacht. Dies wird erfindungsgemäß durch die wie folgt beschriebene Bahnkantensteuerung verhindert: Diejenigen Rollensatzpaare, die die beschriebene Gefahr aufweisen, sind auf einem Schlitten montiert, der um einen Drehpunkt senkrecht zur Bahnfläche so gelagert ist, daß ein Auswandern der Bahn gegenüber diesem Schlitten den Anstell- bzw. Vorspurwinkel des auf dem Schlitten angebrachten Rollensatzpaares dahingehend verändert, daß die verursachende laterale Abweichung der Bahnlage relativ zum Schlitten wieder verschwindet (selbstregelndes Prinzip).

Die Funktionsweise dieser Bahnkantensteuerung kann auch durch eine Servoeinrichtung unterstützt werden.

Für die Stabeinlage wird ein Material verwendet, das zwar hart genug ist, in bestimmungsgemäßer Anwendung nicht zusammengequetscht werden zu können, jedoch ausreichend biegsam, um sich von der Rolle abarbeiten zu lassen (u.B. Polyamid-Stab oder glasfaserumsponnenes Glasfaser-Bündel oder Drahteinlage).

Um die Stabeinlage beim Falzprozeß an ihrem Bestimmungsort vorzufixieren, wird sie vor Auflage auf die Kunststoffbahn (kleberseitig) beim Durchlauf durch eine geeignete Thermokammer oder Heißluftdüse soweit erhitzt, daß sie bei Auflage auf die Kunststoffbahn die Kleberschicht aktiviert und im anschließenden Rollenwerk auf die kalte Kunststoffbahn aufgewalzt wird, wobei der Kleber sofort wieder erstarrt, ohne daß die Bahnkanten unzulässigerweise erweichen. Die Temperatur und die Strömungsgeschwindigkeit der Heißluft werden also so bemessen, daß die Kleberbeschichtung aktiviert, die Kunststoffbahn jedoch unterhalb der Schrumpftemperatur gehalten wird.

An den Rollenstationen, an denen die Bahnkantenbereiche mit der kleberbeschichteten Seite aufeinandergebracht werden, wird die Kleberschicht über geregelte Heißluftströme gezielt erhitzt, und es werden im nachfolgenden Rollensatz die einander gegenüberstehenden Bahnoberflächen miteinander verklebt, wobei die Dicke dieses Bereichs (Pilzstielquerschnitt) sowie die Kontur um die Stabeinlage (Pilzkopfquerschnitt) gleichzeitig kalibriert werden.

Um den ordnungsgemäßen Transport der Kunststoffbahn durch die Stationen zu gewährleisten, wechseln sich Umformstationen (Rollensatzpaare) immer mit Transportstationen (Walzenpaare) ab, die jeweils angetrieben werden. Durchmesser und/oder Drehzahlen der Transportwalzen sind dabei so abgestimmt, daß die Transportgeschwindigkeit im Leerlauf (d.h. ohne Kunststoffbahn) in Transportrichtung von Station zu Station zunimmt. Damit wird eine Straffung der Kunststoffbahn in Längsrichtung bewirkt. Um jedoch eine Beschädigung der Bahnoberfläche zu verhindern sowie auch eine unzulässige Längsdehnung der Kunststoffbahn, arbeiten die Transportwalzen über geeignete Rutschkupplungen, mit denen die Bahnlängsspannung einstellbar ist.

Die Rollensätze sind so befestigt, daß ihr Abstand zum jeweiligen anderen Partner eines jeden Rollensatzpaares veränderbar und feststellbar ist, um Kunststoffbahnen unterschiedlicher Breite verarbeiten zu können.

Die Formrollen können zum Beispiel auch aus einem Rollensatz koaxial gelagerter, jedoch gegeneinander verdrehbarer Einzelrollen bestehen.

Für verschieden breite Manschetten braucht man verschieden breite Transportwalzen. Um nicht für jede Manschettenbreite eine eigene Transportwalze bzw. einen Transportwalzensatz herstellen zu müssen, können die Transportwalzen in der Weise in ihrer Arbeitsbreite verändert werden, daß die Transportwalzen aus Scheiben gleicher oder unterschiedlicher Dicke aber gleichen Durchmessers bestehen, die auf Wellen deren Länge der Maximalverarbeitungsbreite entsprechen, aufgeschoben und dort fixiert werden, und zwar in der Anzahl, die der aktuell geforderten Arbeitsbreite der Transportwalzen entspricht Damit ist die Arbeitsbreite der Transportwalzen stufenweise veränderbar durch Zufügen oder Fortnehmen von mit der Walzenwelle rutschsicher verbindbarer Scheiben jeweils gleichen Durchmessers.

Die das erfindungsgemäße Verfahren bestimmende Vorrichtung kann leicht ergänzt werden durch zusätzliche, an sich bekannte Bestandteile einer Fertigungslinie:
- Abwickeleinheit für Bahnmaterial,
- Kantenbeschnitt,
- Ausrichteinheit und Einführhilfe für das Anfahren,
- Schweißvorrichtung für Untertrittanbringung,
- Bedruckungsanlage,
- Querzerteilungseinrichtung,
- Verpackungseinrichtung.

Anhand von acht Figuren wird nun das Verfahren und die dazu benötigte Umformungsvorrichtung gemäß der Erfindung näher erläutert, wobei die Figuren 1, 2 und 3 den Stand der Technik aufzeigen.
- Figur 1: zeigt das Prinzip eines Einzelverschlusses in Pilzform, wie er zum Beispiel bei Schrumpfbandhaltern gebräuchlich ist.
- Figur 2: zeigt ein Schnittbild des Elementes nach Figur 1.
- Figur 3: zeigt das Verschlußprinzip einer schrumpfbaren Manschette mit umgeschlagenen Längskanten, wobei Stabeinlagen verwendet sind.
- Figur 4: zeigt in schematischer Weise die Anordnung der einzelnen Herstellungsstufen gemäß der Erfindung in der Draufsicht.
- Figur 5: zeigt die Profilform einer Bahnkante entlang der Kunststoffbahn nach Durchlaufen des Rollensatzpaares 1 beim Ausführungsbeispiel.
- Figur 6: zeigt ein Ausführungsbeispiel des Rollensatzes 2.
- Figur 7: zeigt ein Ausführungsbeispiel des Rollensatzes 3.
- Figur 8: zeigt das Verschlußprinzip einer nach dem erfindungsgemäßen Verfahren hergestellten, schrumpfbaren Manschette, wobei zusätzlich ein Untertritt angebracht ist.

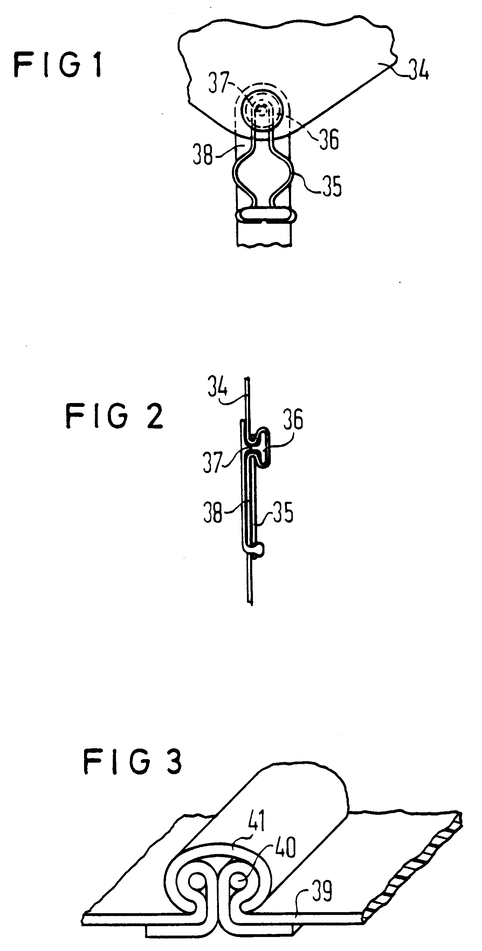

In Figur 1 wird der Stand der Technik erläutert anhand eines sogenannten Strumpfbandhalters. Dort wird ein Flächenteil 34 mit Hilfe eines pilzförmigen Klemmelementes 36-37 an dem Band 38 befestigt, das am freien Ende das pilzförmige Klemmelement 36-37 aufweist. Über den Pilzkopf 36 wird nun das zweite Flächenteil 34 geformt, wobei hinter dem Pilzkopf 36 in der Verengung im Bereich des Pilzstieles 37 die Verklemmung mit Hilfe einer Klemmschlaufe 35 erfolgt. Die unverlierbar mit dem Band 38 verbundene Klemmschlaufe 35 ist so ausgebildet, daß sie zunächst über den mit dem Flächenteil 34 überspannten Pilzkopf 36 geführt werden kann. Nach diesem Überstülpen wird die Klemmschlaufe 35 in der Figur 1 nach unten gezogen, wobei sie nun mit ihrem verengten Teil im Bereich des Pilzstieles 37 abrutschsicher verklemmt wird. Hierbei wird auch das Flächenteil 34 mit eingeklemmt.

Die Figur 2 zeigt das an sich bekannte System nach Figur 1 in einer seitlichen Ansicht. Daraus erkennt man insbesondere die Klemmverhältnisse hinter dem Pilzkopf 36 im Bereich des Pilzstieles 37, wo mit Hilfe der Klemmschlaufe 35 die Verklemmung erfolgt. Das pilzförmige Klemmelement 36-37 ist auf einem Band 38 befestigt.

Weiterhin ist, wie in Figur 3 dargestellt wird, ein Verschluß für eine Kabelmuffe nach der europäischen Patentschrift 0272364 bekannt, bei dem in einem diskontinuierlichen Prozeß die Längskanten 39 einer Manschette um Stabeinlagen 40 herumgebogen und anschließend durch Erwärmung auf diese eingeführten Stabeinlagen 40 aufgeschrumpft werden. Hier ist von Nachteil die diskontinuierliche Herstellung und die Erwärmung der Kantenbereiche beim Fixieren der Stabeinlagen, wodurch bereits eine Schrumpfung eintritt.

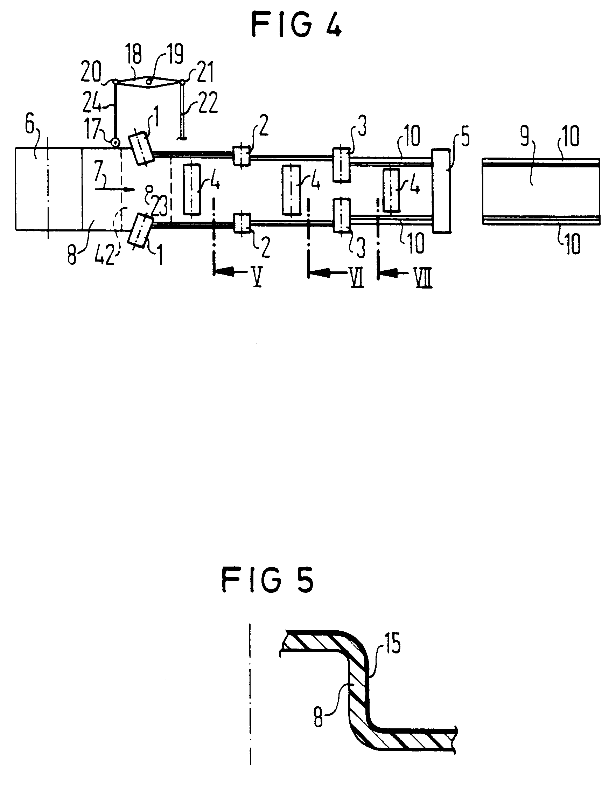

In den folgenden Figuren 4 bis 7 werden nun die Vorteile aufgezeigt, die sich gemäß der Erfindung gegenüber dem Stand der Technik ergeben.

In Figur 4 wird das Prinzip des Verfahrens gemäß der Erfindung mit Hilfe einer dazugehörigen Vorrichtung gezeigt. Hier wird erläutert, wie eine bereits quer zur Verarbeitungsrichtung schrumpffähige Kunststoffbahn 8 entlang beider Längskanten in kontinuierlicher Weise mit Verschlußelementen 10 versehen werden kann, wobei in diesen Verschlußelementen 10 zu beiden Seiten der schrumpffähigen Kunststoffbahn 8 nicht schrumpffähige Stabeinlagen 11 mit eingeformt werden. Die schrumpffähige Kunststoffbahn 8 wird in Verarbeitungsrichtung 7 von einer Abwickeleinheit 6 zur Profilanformung entlang der Längsränder in die erfindungsgemäße Anlage eingebracht und durchläuft nacheinander mit konstanter Verarbeitungsgeschwindigkeit Rollensatzpaare 1, 2 und 3, die an den Längsrändern der wärmeschrumpffähigen Kunststoffbahn 8 positioniert sind. Mit diesen Rollensatzpaaren 1, 2 und 3 erfolgt stufenweise die Profilanformung. Der Transport der Kunststoffbahn 8 wird dabei durch die Transportwalzenpaare 4 vorgenommen, die von einem gemeinsamen Antrieb durch entsprechende Auslegung der Übertragungsglieder und je Walzenpaar zwischengeschalteter Rutschkuplungen oder alternativ über getrennt gesteuerte Antriebe so angetrieben werden, daß im Leerlauf deren Umfangsgeschwindigkeit von links nach rechts in der Anlage gesehen stufenweise ansteigt, so daß bei eingeführter Kunststoffbahn 8 die Arbeitsbahngeschwindigkeit aller Transportwalzenpaare 4 zwar zwangsweise gleich ist, die durch sie auf die Kunststoffbahn 8 ausgeübte Transportkraft jedoch von links nach rechts stufenweise ansteigt und auf die Kunststoffbahn 8 zu ihrer Straffung eine in Transportrichtung 7 ausreichende Zugspannung ausübt.

Im dargestellten Ausführungsbeispiel sind die Drehachsen des Rollensatzpaares 1 nicht senkrecht zur Verarbeitungsrichtung 7 ausgerichtet, sondern um einen Vorspurwinkel zwischen 0^{o} und 90^{o}, vorzugsweise zwischen 0,5^{o} und 5^{o}, jeweils zur Bahnmitte hin verdreht. Damit wird die Kunststoffbahn 8 quer zur Verarbeitungsrichtung 7 gestrafft. Gleichzeitig ist das Rollensatzpaar 1 auf einem Schlitten, der in gestrichelter Form angedeutet ist, montiert, wobei dieser Schlitten 42 über ein Gelenk 23 um eine senkrecht zur Zeichenebene gedachte Achse drehbar ist. Die relative Lage des Schlittens 42 zur Kunststoffbahn 8 wird über ein Lenkgestänge 22 bestimmt, das einerseits gelenkig mit dem Schlitten 42 verbunden die Lenkbewegung des Schlittens 42 bewirkt und andererseits über das Gelenk 21 von dem um die Achse 19 drehbaren Kipphebel 18 betätigt wird, der seinerseits über das Gelenk 20 von der Stange 24 bewegt wird, die über die Abtastrolle 17 die Lage der Kunststoffbahnkante erfaßt.

Diese Bahnkantensteuerung wirkt nun in folgender Weise. Wenn die Kunststoffbahn 8 in Verarbeitungsrichtung 7 gesehen nach links auswandert, so bewegt sich auch die Stange 24 nach links und damit das Lenkgestänge 22 nach rechts, wodurch eine Drehung des Schlittens 42, auf dem das Rollensatzpaar 1 montiert ist, nach rechts erfolgt. Dadurch verringert sich der Vorspurwinkel des Rollensatzes 1 auf der linken Seite der Kunststoffbahn, wohingegen sich der Vorspurwinkel auf der gegenüberliegenden Seite vergrößert. Die Folge davon ist, daß die zur Straffung der Kunststoffbahn 8 quer zur Verarbeitungsrichtung 7 aufgrund der durch die Vorspur wirkenden Querkräfte auf der linken Seite abnehmen und auf der rechten Seite ansteigen. Die resultierende Kraft des Rollensatzpaares 1 weist damit nach rechts und bringt die laterale Abweichung der Kunststoffbahnkante zum Verschwinden. Bei Abweichung der Kunststoffbahn 8 nach rechts läuft der Vorgang spiegelbildlich ab. Dadurch ist man imstande, diese Kunsstoffbahnkantensteuerung so zu dimensionieren, daß ein geradliniger Transport der Kunststoffbahn 8 gewährleistet ist.

Dieser Kipphebelmechanismus 18, 19, 20, 21 kann auch durch eine entsprechend wirkende Servosteuereinheit ersetzt werden.

In der Figur 4 kann weiterhin ersehen werden, daß am Ende der Vorrichtung zum kontinuierlichen Anformen von Verschlußprofilen 10 entlang der Längsränder einer Kunststoffbahn 8 eine Ablängeinrichtung 5 vorgesehen werden kann. Hier besteht die Möglichkeit, in Querrichtung zur Verarbeitungsrichtung 7 eine Abtrennung von der fortlaufend gefertigten Kunststoffbahn vorzunehmen, wobei beliebige Längenabschnitte einstellbar sind. Auf diese Weise können verschieden lange Manschettentypen 9 mit seitlichen Verschlußprofilen 10 erhalten werden.

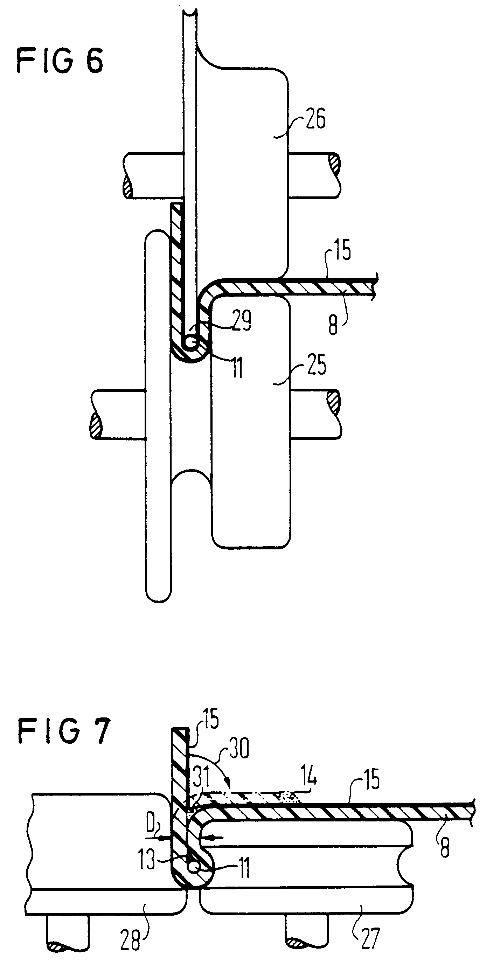

Die Verformung entlang der Kunststoffbahn 8 erfolgt, wie bereits angedeutet, stufenweise in mehreren hintereinander liegenden Schritten und wird mit Hilfe der Rollensatzpaare 1, 2 und 3 vorgenommen. So werden im Rollensatzpaar 1 die Längskanten der Kunststoffbahn 8, die vorzugsweise bereits mit Kleber 15 beschichtet ist, so weit vorgeformt, daß die Stabeinlagen 11 eingelegt werden können. Diese Vorformung weist zweckmäßigerweise Z-förmigen Querschnitt an beiden Längskanten auf, wie es in Figur 5 dargestellt ist. Die dazu einsetzbaren Rollensätze 1 weisen hierfür entsprechende Profile auf, wobei jeder Rollensatz aus einem Rollenpaar oder aus mehreren Rollenpaaren je Längskante aufgebaut sein kann.

Im Rollensatz 2, bestehend aus den Formrollen 25 und 26, wird aus der einlaufenden Kunststoffbahn 8 mit bereits Z-förmigem und in Figur 5 bereits dargestelltem Profil der freie Schenkel hochgefalzt, wie es die Figur 6 zeigt. Gleichzeitig wird über die dort gezeigte Rolle 26 tangential die Stabeinlage 11 in die gebildete Nut 29 eingeführt. Die Stabeinlage 11 läuft vor Einlauf in den Rollensatz 2 durch eine Heizkammer und wird dabei so weit erwärmt, daß sie beim Kontakt mit der bereits auf der Kunststoffbahn 8 befindlichen Kleberschicht 15 in der Nut 29 den Kleber aktiviert und infolgedessen sowohl an der Kunststoffbahn 8 haften bleibt als auch die im Rollensatz 2 gebildete Profilform fixiert, da der Wärmeinhalt der Stabeinlage 11 so gering bemessen wird, daß nach der Verklebung im Rollensatz 2 der Kleber wieder erkaltet und damit verfestigt ist.

Das Hochfalzen des freien Schenkels der Längskante kann jedoch auch bereits im Rollensatz 1 erfolgen, dann wird im Rollensatz 2 lediglich die Positionierung und Verklebung der Stabeinlage 11 vorgenommen.

Die Figur 7 zeigt die Wirkungsweise des Rollensatzes 3, bestehend aus den Formrollen 27 und 28. Hier wird die Nut 19 (siehe Figur 6) vor Einlauf in den Rollensatz 3 über geeignete Mittel, zum Beispiel durch einen Heißluftstrom so weit erwärmt, daß der Kleber 15 in der Nut aktiviert ist. Anschließend wird die Kunststoffbahn 8 entsprechend der Figur 7 so verformt, daß durch die Lage der Formrollen 27 und 28 das dort angegebene Maß D auf doppelte Materialstärke reduziert wird. Dabei sammelt sich der Kleber in den Bereichen 13 und 31. Auch hier erkaltet das Material wieder ausreichend rasch, so daß die erzeugte Profilform in der durch die Rollensatzgeometrie festgelegten Kontur kalibriert erstarrt.

Das Umlegen des noch freien Schenkels in Pfeilrichtung 30 in die gestrichelt dargestellte Form erfolgt zweckmäßigerweise in einem weiteren, hier nicht dargestellten, Rollenpaar des Rollensatzes 3 und wird dort in gleicher Weise kleberseitig erwärmt, umgefalzt, verpreßt, kalibriert und fixiert. Dabei tritt am Ende dieses umgefalzten Schenkels ebenfalls Kleber 14 aus.

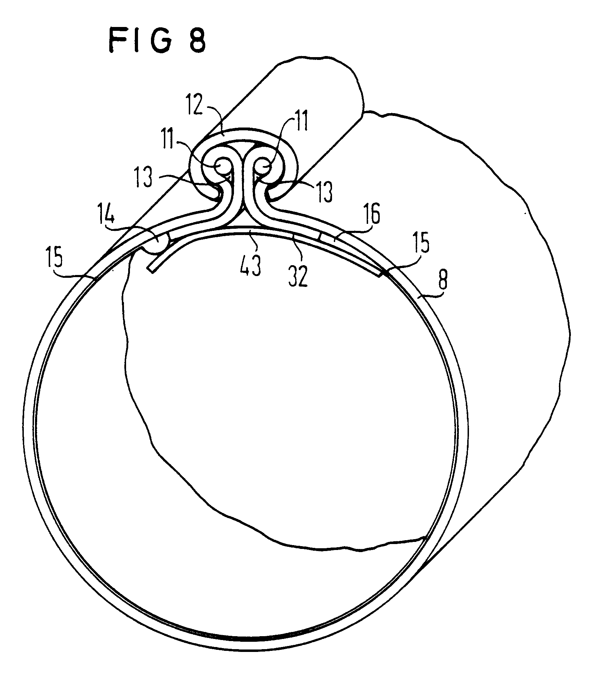

In Figur 8 wird eine fertig montierte Manschette gezeigt, die nach dem oben beschriebenen Verfahren hergestellt ist. In der dargestellten Form ist gezeigt, daß die an den Längsrändern angeformten Verschlußelemente mit den eingelegten längsverlaufenden Stabeinlagen 11 aneinander geführt sind und mit einer Längsschiene 12 zusammengehalten werden. Außerdem ist im Inneren der Manschette ein sogenannter Untertritt 43 erkennbar, mit dem die Stoßstelle der Verschlußelemente längsseitig überbrückt wird. Dieser Untertritt 43 kann zum Beispiel als Band aufgewalzt werden. Dies erfolgt zweckmäßigerweise so, daß dessen kLeberbeschichtete Seite zur Aktivierung des Klebers erwärmt wird, wodurch auch die beim Fertigungsvorgang ausgetretene Klebermenge 14 erweicht wird. Dies führt dazu, daß die untertrittseitige Klebermenge 14 zu der mit 26 bezeichneten Form des Klebers auf der rechten Seite, verquetscht wird. Außerdem wird der Untertritt 43 mit der Längskante im Bereich 32 verklebt.

Ein Vorteil dieser erfindungsgemäßen Vorrichtung besteht auch darin, daß durch die vorgewählte Bandbreite der Durchmesser der Manschetten bestimmt werden kann. Außerdem läßt sich in jedem dieser Fälle durch Wahl der entsprechenden Intervalle bei der Betätigung der Ablängvorrichtung 5 die Manschettenlänge bestimmen.

Die Kunstoffbahn 8 besteht aus einem der üblichen Schrumpfcompounds, vorzugsweise einem Polyolefin. Sie kann auch aus bekanntem faserverstärktem Material bestehen, zum Beispiel in Form einer Kunststoffmatrix mit einer eingebrachten Verstärkungseinlage aus Fasern, Fäden oder einer flächigen Einlage. Die Kunststoffbahn 8 kann auch zur Verringerung der Dampfpermeation mit einer Aluminiumfolie beschichtet sein. Die Kunststoffbahn 8 ist vorzugsweise bereits mit einem üblichen Heißschmelzkleber, zum Beispiel einem Polyamid-Heißschmelzkleber, beschichtet, dessen Aktivierungstemperatur unterhalb der Schrumpftemperatur liegt.

Innerhalb eines Rollensatzes können jeweils mehrere Formrollen angeordnet werden, die sich in ihren Profilen in entsprechender Weise ergänzen. Es könnte jedoch auch ein geradliniges Profil angeordnet sein, gegen das eine einzelne, korrespondierende Formrolle arbeitet. Die Abstände zwischen den einzelnen Formrollen bzw. der Formrolle und dem geradlinigen Profil werden entsprechend der Dicke der Kunststoffbahn eingestellt.

Die Stabeinlagen werden zu beiden Seiten der Kunststoffbahn aus entsprechenden Speicherbehältern zugeführt und bestehen, wie bereits angegeben, aus nicht schrumpfbarem Material.

In der letzten Formstufe wird auch die entsprechende Kalibrierung der Verschlußelemente vorgenommen, und zwar erhalten sie auf ihrer Dichtseite eine ebene Fläche, während sie auf der Rückseite ein hinterschnittenes Profil aufweisen, in welches jeweils die aufzuziehende Verschlußschiene eingeführt wird.

Die am Ende der Verarbeitungsvorrichtung vorgesehene Ablängvorrichtung 5 wird vorzugsweise als Stanze ausgeführt und wird in entsprechenden Intervallen gesteuert.

## Patentansprüche

1. Verfahren zur Anformung von Profilen pilzförmigen Querschnitts als Verschlußelemente (10)entlang der beiden Längskanten einer quer zur Längsrichtung wärmeschrumpffähigen Kunststoffbahn (8),
**dadurch gekennzeichnet,**
daß beide Längskanten der Kunststoffbahn (8) in Längsrichtung fortlaufend und gleichzeitig durch mindestens drei Rollensatzpaare (1, 2, 3) spiegelbildlich zueinander zu Verschlußelementen (10) umgeformt werden, wobei mindestens ein Rollensatzpaar (1) mit einer Vorspur so auf einem um eine vertikale Achse (23) verdrehbaren Schlitten (42) montiert ist, daß die Kunststoffbahn (8) während des Ablaufs quer gestrafft wird und daß durch eine an einer Längskante der Kunststoffbahn (8) befindliche Abtastvorrichtung (17) die Winkelstellung des Schlittens (42) so veränderbar ist, daß ein seitliches Auswandern der Kunststoffbahn (8) verhindert wird, daß in einem zweiten Rollensatzpaar (2) jede der Längskanten der Kunststoffbahn (8) zu einer Nut geformt wird, daß gleichzeitig oder nachfolgend Stabeinlagen (11) in die geformte Nut eingebracht werden, wobei die Stabeinlagen (11)vor dem Einbringen so erwärmt werden, daß beim Berühren der mit Kleber beschichteten Kunststoffbahn (8) der Kleber aktiviert wird und daß die Stabeinlagen (11) beim Erkalten des Klebers fixiert werden, daß anschließend jede der bereits soweit umgeformten Längskanten auf ihrer kleberbeschichteten Seite bis zur Aktivierung der Kleberbeschichtungen erwärmt wird und daß jede Längskante durch ein weiteres Rollensatzpaar (3) um die jeweils fixierte Stabeinlage (11) herumgeformt, durch Anpressen verklebt und als Verschlußelement mit einer ebenen Seite und mit einer hinterschnittenen Profilseite kalibriert wird und daß schließlich die kontinuierlich gefertigte Kunststoffbahn (8) in einer Ablängvorrichtung (5) in gewünschter Größe in Einzelstücke (9) abgelängt wird.

2. Verfahren nach Anspruch 1,
**dadurch gekennzeichnet,**
daß die Verformung der Längskanten der Kunststoffbahn (8) innerhalb eines Rollensatzes (1, 2, 3) jeweils durch einzelne Formrollen gegeneinander und/oder gegen entsprechende Formprofile erfolgt.

3. Verfahren nach Anspruch 1,
**dadurch gekennzeichnet,**
daß die Verformung der Längskanten der Kunststoffbahn (8) innerhalb eines Rollensatzes (1, 2, 3) jeweils durch mehrere, sich im Formprofil ergänzende Formrollen (25, 26, 27, 28) erfolgt.

4. Verfahren nach einem der vorhergehenden Ansprüche,
**dadurch gekennzeichnet,**
daß das Erwärmen von Teilbereichen der Kunststoffbahn mit Hilfe von Heißluftdüsen erfolgt, wobei die Temperatur und die Strömungsgeschwindigkeit der Heißluft so bemessen werden, daß die Kleberbeschichtung aktiviert wird, die Kunststoffbahn (8) aber unterhalb der Schrumpftemperatur gehalten wird.

5. Verfahren nach einem der vorhergehenden Ansprüche,
**dadurch gekennzeichnet,**
daß nach Beendigung der Verformungen entlang eines Längsrandes der Kunststoffbahn (8) ein Untertritt (43) angebracht wird, vorzugsweise durch Erwärmen der Kleberbeschichtung des Untertritts (43) der Kunststoffbahn (8) und Aufwalzen des Untertritts (43) auf die Kunststoffbahn (8).

6. Verfahren nach einem der vorhergehenden Ansprüche,
**dadurch gekennzeichnet,**
daß die Abtastung und Regelung zur Führung der Kunststoffbahn (8) entlang einer Längskante mit Hilfe einer Hebelmechanik (17-18-19-20-21-22-24) erfolgt

7. Verfahren nach einem der Ansprüche 1 bis 5,
**dadurch gekennzeichnet,**
daß die Abtastung und Regelung zur Führung der Kunststoffbahn (8) mit Hilfe einer Servosteuereinheit erfolgt.

8. Vorrichtung zur Durchführung des Verfahrens nach einem der Ansprüche 1 bis 7,
**dadurch gekennzeichnet,**
daß eine Abziehvorrichtung für die Kunststoffbahn (8) am Beginn der Vorrichtung angeordnet ist, daß ein erstes Rollensatzpaar (1) zur z-förmigen Aufformung der Längskanten der Kunststoffbahn (8) angeordnet ist, daß die Drehachsen des ersten Rollensatzpaares (1) unter einem Vorspurwinkel zur Mitte der Verarbeitungsbahn hin gerichtet sind, daß das erste Rollensatzpaar (1) auf einem drehbaren Schlitten (42) montiert ist, daß dieser Schlitten (42) durch eine Abtastvorrichtung (17) und einen Verstellmechanismus (18-19-20-21-22-24) steuerbar ist, daß weitere Rollensatzpaare (2, 3) zum Umformen der bereits angeformten Längskanten der Kunststoffbahn (8) nachfolgend angeordnet sind, wobei in jedem Rollensatzpaar (2, 3) mindestens eine Formrolle (25, 26, 27, 28) angeordnet ist, daß mehrere Transportrollen (4) entlang der Verarbeitungsbahn angeordnet sind, daß an den Einlaufstellen für die Stabeinlagen (11) und an den Verklebestellen im zuletzt angeordneten Rollensatzpaar (3) Erwärmungseinrichtungen angeordnet sind, daß im letzten Rollensatzpaar eine Kalibrierungseinrichtung mit Formrollen (27, 28) angeordnet ist und vorzugsweise in Form einer Stanze, angeordnet ist.

9. Vorrichtung nach Anspruch 8,
**dadurch gekennzeichnet,**
daß in den Rollensätzen der Rollensatzpaare (1, 2, 3) feste Formprofile und entsprechend profilierte Formrollen angeordnet sind.

10. Vorrichtung nach Anspruch 8,
**dadurch gekennzeichnet,**
daß in den Rollensätzen der Rollensatzpaare (1, 2, 3) jeweils mit ihrem Profil korrespondierende Formrollen (25-26, 27-28) angeordnet sind.

11. Vorrichtung nach einem der Ansprüche 8 bis 10,
**dadurch gekennzeichnet,**
daß die Transportrollen (4) von einem gemeinsamen Antrieb durch entsprechende Auslegung der Übergangsglieder und je Rolle zwischengeschalteter Rutschkupplungen so angetrieben werden, daß deren Leerlaufgeschwindigkeit von Stufe zu Stufe ansteigt.

12. Vorrichtung nach einem der Ansprüche 8 bis 10,
**dadurch gekennzeichnet,**
daß die Transportrollen (4) durch getrennt gesteuerte Antriebe so gesteuert werden, daß die Leerlaufgeschwindigkeit von Stufe zu Stufe ansteigt.

13. Vorrichtung nach einem der Ansprüche 8 - 12,
**dadurch gekennzeichnet,**
daß Formrollen aus einem Rollensatz koaxial gelagerter, jedoch gegeneinander verdrehbarer Einzelrollen bestehen.

## Claims

1. Method for moulding profiles of mushroom-shaped cross-section, as closure elements (10), along the two longitudinal edges of a plastic web (8) which is heat-shrinkable transversely to the longitudinal direction, characterized in that the two longitudinal edges of the plastic web (8) are continuously and simultaneously shaped in the longitudinal direction by means of at least three pairs of sets of rollers (1, 2, 3), in a mirror-image fashion in relation to each other, to form closure elements (10), at least one pair of sets of rollers (1) being mounted with a toe-in on a slide (42), which can be rotated about a vertical axis (23), in such a way that the plastic web (8) is tautened transversely as it runs off, and in that, by means of a sensing device (17) located on one longitudinal edge of the plastic web (8), the angular position of the slide (42) can be altered in such a way that lateral run-out of the plastic web (8) is prevented, in that in a second pair of sets of rollers (2) each of the longitudinal edges of the plastic web (8) is shaped to form a groove, in that simultaneously or subsequently rod inlays (11) are fitted into the shaped groove, the rod inlays (11), before being fitted, being heated in such a way that when they come into contact with the adhesive-coated plastic web (8) the adhesive is activated, and in that the rod inlays (11) are fixed when the adhesive cools down, in that subsequently each of the longitudinal edges which have already been shaped to this extent is heated, on its adhesive-coated side, until the adhesive coatings are activated, and in that each longitudinal edge is shaped around the respectively fixed rod inlay (11) by means of a further pair of sets of rollers (3), is bonded by means of pressing on and is calibrated as a closure element with one flat side and with an undercut profiled side, and in that, finally, the continuously produced plastic web (8) is cut to length into individual pieces (9) of desired size in a cutting-to-length device (5).

2. Method according to Claim 1, characterized in that the deformation of the longitudinal edges of the plastic web (8) within a set of rollers (1, 2, 3) is carried out in each case by means of individual shaping rollers against each other and/or against corresponding shaping profiles.

3. Method according to Claim 1, characterized in that the deformation of the longitudinal edges of the plastic web (8) within a set of rollers (1, 2, 3) is carried out in each case by means of a plurality of shaping rollers (25, 26, 27, 28) which are complementary in terms of the shaping profile.

4. Method according to one of the preceding claims, characterized in that the heating of partial regions of the plastic web is carried out with the aid of hot-air nozzles, the temperature and the flow velocity of the hot air being set in such a way that the adhesive coating is activated but the plastic web (8) is kept below the shrinking temperature.

5. Method according to one of the preceding claims, characterized in that, on completing the deformations along one longitudinal edge of the plastic web (8), an underflap (43) is fitted, preferably by means of heating the adhesive coating of the underflap (43) of the plastic web (8) and rolling the underflap (43) onto the plastic web (8).

6. Method according to one of the preceding claims, characterized in that the sensing and control for guiding the plastic web (8) along one longitudinal edge is carried out with the aid of a lever mechanism (17-18-19-20-21-22-24).

7. Method according to one of Claims 1 to 5, characterized in that the sensing and control for guiding the plastic web (8) is carried out with the aid of a servo control unit.

8. Device for carrying out the method according to one of Claims 1 to 7, characterized in that a draw-off device for the plastic web (8) is arranged at the beginning of the device, in that a first pair of sets of rollers (1) is arranged for the z-shaped upward shaping of the longitudinal edges of the plastic web (8), in that the axes of rotation of the first pair of sets of rollers (1) are directed at a toe-in angle towards the centre of the processing track, in that the first pair of sets of rollers (1) is mounted on a rotatable slide (42), in that this slide (42) can be controlled by means of a sensing device (17) and an adjusting mechanism (18-19-20-21-22-24), in that further pairs of sets of rollers (2, 3) for shaping the already moulded longitudinal edges of the plastic web (8) are arranged subsequently, at least one shaping roller (25, 26, 27, 28) being arranged in each pair of sets of rollers (2, 3), in that a plurality of transport rollers (4) are arranged along the processing track, in that, heating devices are arranged at the entry points for the rod inlays (11) and at the bonding points in the pair of sets of rollers (3) which is arranged in the last position and in that a calibration device having shaping rollers (27, 28) and preferably in the form of a punch is arranged in the last pair of sets of rollers.

9. Device according to Claim 8, characterized in that, in the sets of rollers of the pairs of sets of rollers (1, 2, 3), there are arranged fixed shaping profiles and correspondingly profiled shaping rollers.

10. Device according to Claim 8, characterized in that in the sets of rollers of the pairs of sets of rollers (1, 2, 3), there are arranged shaping rollers (25-26, 27-28) respectively corresponding in their profile.

11. Device according to one of Claims 8 to 10, characterized in that the transport rollers (4) are driven by a common drive, by means of corresponding design of the transmission elements and slipping clutches interposed per roller, in such a way that their idling speed increases from stage to stage.

12. Device according to one of Claims 8 to 10, characterized in that the transport rollers (4) are controlled by means of separately controlled drives in such a way that the idling speed increases from stage to stage.

13. Device according to one of Claims 8 - 12, characterized in that shaping rollers comprise a set of rollers which are coaxially mounted but in which individual rollers can be rotated relative to one another.

## Revendications

1. Procédé de formation de profilés de section transversale en forme de champignon comme éléments de fermeture (10) le long des deux bords longitudinaux d'une bande (8) de matière plastique thermorétractable transversalement à la direction longitudinale,
caractérisé en ce qu'il consiste
à transformer les deux bords longitudinaux de la bande (8) en matière plastique d'une manière continue dans la direction longitudinale et simultanément en éléments de fermeture (2) symétriques comme en un miroir l'un de l'autre, par au moins trois paires (1, 2, 3) de jeux de galets, au moins une paire (1) de jeux de galets étant montée avec un angle de pincement tel sur un chariot (42) tournant par rapport à un axe (23) vertical que la bande (8) de matière plastique soit tendue transversalement pendant l'opération et que, par un dispositif (17) de détection se trouvant sur un bord longitudinal de la bande (8) de matière plastique, la position angulaire du chariot (42) puisse être modifiée de façon à empêcher toute sortie latérale de la bande (8) de matière plastique, à transformer dans une deuxième paire (2) de jeux de rouleaux chacun des bords longitudinaux de la bande (8) de matière plastique en une gorge, à introduire en même temps ou ultérieurement des barreaux (11) d'insertion dans la gorge formée, les barreaux (11) d'insertion étant réchauffés avant l'introduction de manière que, lors de la mise en contact de la bande (8) de matière plastique revêtue de colle, la colle soit activée et que les barreaux (11) d'insertion soient fixés lors du refroidissement de la colle, à chauffer ensuite chacun des bords longitudinaux ainsi transformés du côté revêtu de colle jusqu'à activation des couches de colle, et à transformer chaque bord longitudinal par une autre paire (3) de jeux de galets autour du barreau (11) d'insertion fixé, à le coller par application d'une pression et à le calibrer en tant qu'élément de fermeture ayant une face plane et une face profilée en contre-dépouille et enfin, à découper la bande (8) de matière plastique finie en continu dans un dispositif (5) de mise à longueur à la dimension souhaitée en tronçons (9).

2. Procédé suivant la revendication 1,
caractérisé
en ce qu'il consiste à effectuer la déformation des bords longitudinaux de la bande (8) en matière plastique dans un jeu (1, 2, 3) de galets par des galets de conformation s'appliquant l'un contre l'autre et/ou sur des profilés de conformation adéquats.

3. Procédé suivant la revendication 1,
caractérisé
en ce qu'il consiste à effectuer la déformation des bords longitudinaux de la bande (8) en matière plastique dans un jeu (1, 2, 3) de galets, par plusieurs galets (25, 26, 27, 28) de conformation se complétant en un profilé de conformation.

4. Procédé suivant l'une des revendications précédentes,
caractérisé
en ce qu'il consiste à effectuer le chauffage de parties de la bande de matière plastique à l'aide de buses à air chaud, la température et la vitesse d'écoulement de l'air chaud étant telles que le revêtement de colle est activé, mais que la bande (8) en matière plastique est maintenue en dessous de la température de retrait.

5. Procédé suivant l'une des revendications précédentes,
caractérisé
en ce qu'il consiste, après achèvement de la déformation le long d'un bord longitudinal de la bande (8) en matière plastique, à monter une pièce (43) venant en-dessous, de préférence en chauffant le revêtement de colle de la pièce (43) venant en-dessous de la bande (8) en matière plastique et en appliquant la pièce (43) venant par en-dessous à la bande (8) de matière plastique.

6. Procédé suivant l'une des revendications précédentes,
caractérisé
en ce qu'il consiste à effectuer la détection et la régulation pour guider la bande (8) en matière plastique le long d'un bord longitudinal à l'aide d'un mécanisme à levier (17, 18, 19, 20, 21, 22, 24).

7. Procédé suivant l'une des revendications 1 à 5,
caractérisé
en ce qu'il consiste à effectuer la détection et la régulation pour le guidage de la bande (8) de matière plastique à l'aide d'une unité de servocommande.

8. Dispositif pour la mise en oeuvre du procédé suivant l'une des revendications 1 à 7,
caractérisé
en ce qu'il est prévu un dispositif de dévidage de la bande (8) en matière plastique au début du dispositif, en ce qu'il est prévu une première paire (1) de jeux de galets pour donner aux bords longitudinaux de la bande (8) en matière plastique une forme en Z, en ce que les axes de rotation de la première paire (1) de jeux de galets font un certain angle de pincement avec le milieu de la voie de traitement, en ce que la première paire (1) de jeux de galets est montée sur un chariot (42) tournant, en ce que ce chariot (42) peut être commandé par un dispositif de détection (17) et par un mécanisme de réglage (18,19,20,21,22,24), en ce que d'autres paires (2,3) de jeux de galets sont prévues ensuite pour déformer les bords longitudinaux déjà formés de la bande (8) en matière plastique, au moins un galet de conformation (25,26,27,28) étant prévu dans chaque paire de jeux de galets, en ce que plusieurs galets (4) de transport sont disposés le long de la voie de traitement, en ce que, au point d'entrée pour les barreaux (11) d'insertion et au point de collage à la paire (3) de jeux de galets disposée en dernier, il est prévu des dispositifs de chauffage, en ce que, dans la dernière paire de jeux de galets, il est prévu un dispositif de calibrage ayant des galets (27,28) de conformation, et il est prévu un dispositif de découpage de préférence sous la forme d'une presse.

9. Dispositif suivant la revendication 8,
caractérisé
en ce qu'il est prévu, dans les jeux de paires (1,2,3) de jeux de galets, des profilés de conformation fixe et des galets de conformation profilés de manière correspondante.

10. Dispositif suivant la revendication 8,
caractérisé
en ce qu'il est prévu, dans les jeux de paires (1,2,3) de jeux de galets, des galets de conformation (25,26,27,28) correspondant à leurs profils.

11. Dispositif suivant l'une des revendications 8 à 10,
caractérisé
en ce que les galets de transport d'un dispositif d'entraînement commun sont entraînés par une conception adéquate des éléments de transition et pour chaque galet par l'interposition d'un accouplement à friction de manière que la vitesse à vide augmente de pas en pas.

12. Dispositif suivant l'une des revendications 8 à 10,
caractérisé
en ce que les galets (4) de transport sont commandés par des dispositifs d'entraînement commandés indépendamment de façon que la vitesse à vide augmente de pas en pas.

13. Dispositif suivant l'une des revendications 8 à 12,
caractérisé
en ce que les galets de conformation sont constitués d'un jeu de galets composé de galets individuels montés coaxialement mais pouvant tourner les uns par rapport aux autres.
